**Europäisches Patentamt**

**European Patent Office**

**Office européen des brevets**

(19)

(11) **EP 1 363 347 A1**

(12) **EUROPEAN PATENT APPLICATION**

(43) Date of publication:
**19.11.2003 Bulletin 2003/47**

(51) Int Cl.7: **H01M 10/44**, H02J 7/00,
B60L 11/18, H01M 10/40

(21) Application number: **03007290.4**

(22) Date of filing: **31.03.2003**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: **17.04.2002 JP 2002115308**

(71) Applicant: **NISSAN MOTOR CO., LTD.
Yokohama-shi Kanagawa-ken (JP)**

(72) Inventors:
• **Tanjou, Yuuji
Yokohama-shi, Kanagawa-ken (JP)**
• **Watanabe, Kyoichi
Yokohama-shi, Kanagawa-ken (JP)**
• **Shimamura, Osamu
Yokohama-shi, Kanagawa-ken (JP)**
• **Itou, Takanori
Zushi-shi, Kanagawa-ken (JP)**
• **Horie, Hideaki
Yokosuka-shi, Kanagawa-ken (JP)**
• **Sugawara, Hiroshi
Yokosuka-shi, Kanagawa-ken (JP)**
• **Abe, Takaaki
Yokosuka-shi, Kanagawa-ken (JP)**

(74) Representative: **Weber, Joachim, Dr.
Hoefer & Partner
Patentanwälte
Gabriel-Max-Strasse 29
81545 München (DE)**

(54) **Battery and related method**

(57)     A battery includes connector members and a plurality of unit cells connected in parallel through the connector members. Each of the plurality of unit cells having a gradient in a curve of an open circuit voltage with respect to a depth of discharge such that depths of discharge of the plurality of the unit cells are balanced in level to one another.

FIG. 1

**Description**

**BACKGROUND OF THE INVENTION**

The present invention relates to a battery and a related method and, more particularly, to a battery, composed of a plurality of unit cells in combination enabled to exhibit a large power output to be preferably used for a vehicle such as a hybrid automotive vehicle, and its related method.

In recent years, there has been a more and more increasing demand in the social requirement for chargeable and dischargeable secondary batteries for use as power sources to be used in various applications in wide areas covering portable mobile units and vehicles. Considerable development work has been undertaken in the past to commercially provide a nickel cadmium secondary battery, a nickel hydrogen secondary battery, and a lithium secondary battery, such as a lithium ion secondary battery and a lithium polymer secondary battery.

When using the unit cell as a power supply of an equipment that needs a slight amount of electric power, the electric power needed for driving such an equipment can be satisfied with only the unit cell. However, when using the unit cell as a power source of the vehicle, the unit cell has an inability to provide a sufficient electric power and, so, it has been a usual practice to employ a battery using a plurality of unit cells connected in series, in parallel or in combination of these connections.

Japanese Patent Application Laid-Open Publication No. H8-241705 discloses a battery wherein groups of unit cells connected in parallel are connected in series.

**SUMMARY OF THE INVENTION**

However, careful studies undertaken by the present inventors have revealed that if an abnormal unit cell as to a charging and discharging characteristic is contained in the battery, then a whole of the battery tends to have a deteriorated cycle characteristic.

Here, with the structure disclosed in Japanese Patent Application Laid-Open Publication No. 8-241705, it is conceived that the presence of the battery so as to remove a portion, where the unit ells are simply connected in series, prevents the cycle characteristic of the battery caused by such abnormal product from being deteriorated to some extent.

To study such a particular structure more in detail, the particular structure is arranged so as to merely average an adverse affect to be caused by the abnormal product through parallel connection of the unit cells, with no basic solution in the characteristic of the battery per se. Consequently, there is a certain limit in improvement of the cycle characteristic of the battery merely by the parallel connection of the unit cells.

Now, let's consider about the battery having two unit cells connected in parallel.

If the unit cells connected in parallel have completely identical battery performances, there is no problem at all. However, in an actual practice, there exists an unevenness in charging and discharging characteristics of the unit cells owing to various factors. In particular, supposing that the battery, wherein one unit cell X has a depth of discharge (DOD) of 49 % whereas the other unit cell Y has the depth of discharge (DOD) of 51 % to cause an unevenness in DOD, is discharged until the depth of discharge entirely reaches a value of 100 %. Then, the unit cell X can not reach a completely discharged state (i.e., with DOD of 99 %), and the unit cell Y reaches an overcharged state (i.e., with DOD of 101 %). On the contrary, charging this battery until the battery reaches the depth of discharge of 0 % as a whole causes the unit cell X to become overcharged (i.e., with DOD of -1 %) and the unit cell Y to be insufficiently charged (i.e., with DOD of 1 %). That is, it is conceivable that the battery with such a structure is deteriorated due to overcharging or over-discharging, providing a tendency to cause deterioration in the cycle characteristic of the battery.

The present invention has been completed upon studies by the present inventor set forth above and has an object to provide a battery, which has a plurality of unit cells connected in parallel and has a favorable cycle characteristic, and a related method.

To achieve such an object, one aspect of the present invention provides a battery comprising: connector members; and a plurality of unit cells connected in parallel through the connector members, each of the plurality of unit cells having a gradient in a curve of an open circuit voltage with respect to a depth of discharge such that depths of discharge of the plurality of the unit cells are balanced in level to one another.

In other words, another aspect of the present invention provides a battery comprising: connector members; and a plurality of unit cells connected in parallel through the connector members, each of the plurality of unit cells having balancing means for balancing depths of discharge of the plurality of the unit cells to one another.

Besides, another aspect of the present invention provides method of manufacturing a battery, comprising: preparing connector members; and connecting a plurality of unit cells in parallel through the connector members, each of the plurality of unit cells having a gradient in a curve of an open circuit voltage with respect to a depth of discharge such that depths of discharge of the plurality of the unit cells are balanced in level to one another.

Other and further features, advantages, and benefits of the present invention will become more apparent from the following description taken in conjunction with the following drawings.

**BRIEF DESCRIPTION OF THE DRAWINGS**

Fig. 1 is a typical view illustrating a structure of a battery and a structure in which the battery is connected, in an embodiment according to the present invention;

Fig. 2 is a cross sectional view of a unit cell forming the battery shown in Fig. 1, in the embodiment;

Fig. 3 is a typical cross sectional view of a vehicle in which the battery of Fig. 1 is installed, in the embodiment;

Fig. 4 is a graph illustrating the relationships between depths of discharge (DOD) of various positive electrode materials of unit cells of the batteries and related open circuit voltages (OV), in the embodiment;

Fig. 5 is a graph illustrating an influence exerted to a curve of the depth of discharge (DOD)-open circuit voltage (OV) when a portion of manganese of lithium manganese oxide of the unit cell forming the battery is substituted with another element, in the embodiment;

Fig. 6 is a graph illustrating the relationships between the depths of discharge (DOD) and the open circuit voltages (OV) when using various negative electrode materials of the battery, in the embodiment;

Fig. 7 is a graph illustrating influences exerted to a curve of the depth of discharge (DOD)-open circuit voltage (OV) when altering combinations between positive electrode materials and the negative electrode materials of the unit cells forming the batteries, in the embodiment;

Fig. 8 is a graph illustrating a cycle characteristic of the battery, in the embodiment;

Fig. 9 is a graph illustrating the cycle characteristic of a battery formed as a comparative example, in the embodiment; and

Fig. 10 is a graph illustrating the cycle characteristics of a laminate battery forming the battery shown in Fig. 1, and a can type battery, in the embodiment.

**DETAILED DESCRIPTION OF THE PREFERRED EMBODIMENT**

Reference is now made to the drawings to describe an embodiment of a battery and a related method according to the present invention hereinafter.

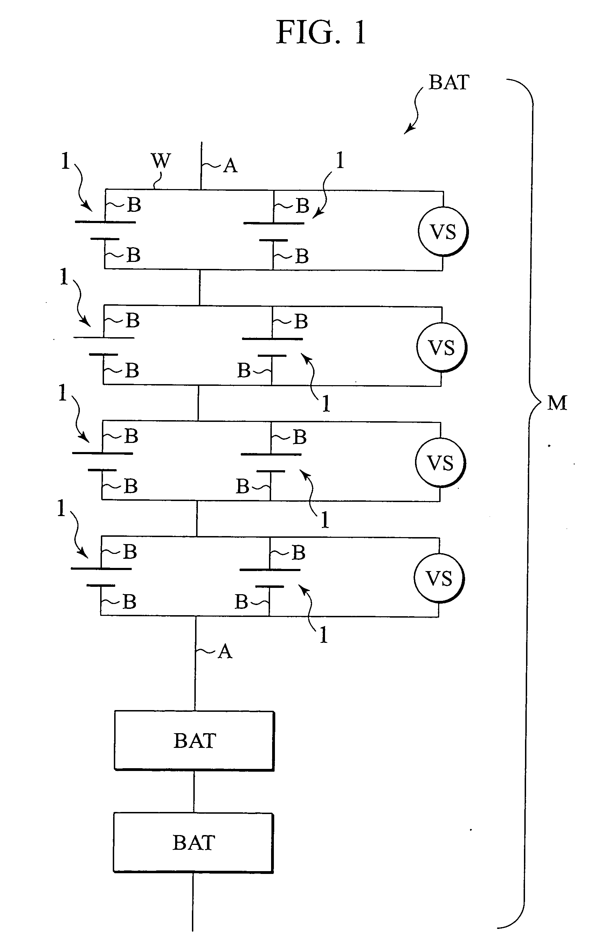

Fig. 1 is a typical view illustrating a battery of the embodiment according to the present invention.

The battery BAT shown in Fig. 1 is comprised of four sets of groups, connected in series, each group including two unit cells 1 connected in parallel via connector members W. These batteries are mutually connected to form a battery module M. In the figure, a typical example is shown which has a structure wherein the batteries are mutually connected in series.

Of course, the present invention is not limited to a particular combination of unit cells in such a battery and may arbitrarily take any other combinations, if desired. Namely, the number of parallel connections or series connections may be appropriately determined in consideration of an output capacity, a reliability in operation, a battery cost and a shape required for the battery.

However, it is important to focus on the fact that, in order to greatly pull out a specific advantage from the battery of the presently filed embodiment, the battery should not have unit cells which are connected in series with respect to other unit cells and the unit cell groups, that is, that all the unit cells are connected to at least one of other unit cells in parallel. That is to say, with no presence of the unit cells connected in series, it is effective to limit occurrence of unevenness in discharged states between the unit cells while enabling a cycle characteristic of the battery to be improved. Here, an expression that "the unit cells are connected in series" refers to a situation wherein more than two unit cells are directly connected in series without intervening an electric junction point. That is, with the structure shown in Fig. 1, since more than two sets of unit cell groups, wherein unit cells are connected in parallel, are mutually connected in series with respect to one another, the battery of the presently filed embodiment does not fall in a situation where "the unit cells are connected in series".

Next, a more detailed description is given to factors affecting a gradient (inclination) of an open circuit voltage with respect to a depth of discharge, in a depth of discharge-open circuit voltage curve, and effects to be caused in the battery using the unit cells satisfying such factors, in the presently filed embodiment.

In particular, suppose the battery is studied which has one unit cell X and the other unit cell Y connected and there exists an unevenness such that the depth of discharge of the unit cell X falls in 49 % and the depth of discharge of the unit cell Y falls in 51 %. Here, typically, considering the unit cell, used in such a battery, having a constant value in the gradient of the open circuit voltage with respect to the depth of discharge in the depth of discharge-open circuit voltage curve, there is a probability wherein the voltage of the unit cell X falling in the depth of discharge of 49 % becomes higher than the voltage of the unit cell Y falling in the depth of discharge of 51 %. If so, electric current flows from the unit cell X remaining at the high voltage level toward the unit cell Y remaining at the low voltage level such that the depth of discharge of the unit cell X and the depth of discharge of the unit cell Y fall in respective values of 50 % to be equalized to naturally cause both the unit cells to be balanced in the depth of discharge.

In actual practice, it has becomes clear that such an effect can satisfactorily result from the unit cell whose gradient of the open circuit voltage with respect to the depth of discharge is equal to or greater than 5 mV/% and equal to or less than 20 mV/% at a region greater than 50 % in the depth of discharge. Further, more preferably, it has become clear that such an effect can be reliably and satisfactorily obtained by using the unit cell whose gradient of the open circuit voltage with respect to the depth of discharge is equal to or greater than 5 mV/% and equal to or less than 20 mV/% at the region greater than 80 % in the depth of discharge.

Furthermore, with a view to avoid the unit cell from being overcharged, the gradient of the open circuit voltage with respect to the depth of discharge may be preferably selected to be equal to or greater than 5 mV/% and equal to or less than 20 mV/% in the vicinity of a region of 0 % in the depth of discharge. Also, with the unit cell having such a charging and discharging characteristic, it is possible to effectively limit occurrence of unevenness between the unit cells in the depth of discharge during a last stage of a charging period.

In the presently filed embodiment, here, it is to be understood that "the depth of discharge (DOD)" refers to a degree in which discharge occurs, and it is supposed that a fully charged state, upon which no further charging is deemed to occur in a predetermined application mode, is assigned as having the depth of discharge of 0 % and a status in which the unit cell is deemed to be fully discharged in the predetermined application mode is assigned as having the depth of discharge of 100 %.

Concretely, the depth of discharge can be defined in various ways stated below. That is, the state exhibiting the open circuit voltage of 4.2 V per one unit cell is defined as the fully charged state (depth of discharge of 0 %). Also, the state in which the unit cell has provided an output voltage of 2.5 V when the unit cell is discharged at an electric current value on time rate of five hours can be defined as having the depth of discharge of 100 %. Also, "the open circuit voltage" refers to a voltage of the unit cell to which no load is connected and can be measured by voltage sensors VS each connected to each unit cell group as shown in Fig. 1.

Further, the unit cell which can be used includes a secondary battery that is able to be charged and discharged and involves a variety of secondary batteries such as a nickel cadmium secondary battery, a nickel hydrogen secondary battery, and a lithium secondary battery such as a lithium ion secondary battery and a lithium polymer secondary battery. Among these secondary batteries, in consideration of a light weight in structure and a battery characteristic, it may be preferred to use the lithium ion secondary battery.

Hereinafter, although the presently filed embodiment is described in detail with reference to the embodiment in which the lithium ion secondary battery is employed, it is of course to be noted that the scope of the present invention is not intended to be limited to such a particular lithium ion secondary battery and, so long as a prescribed charging and discharging characteristic is exhibited to obtain an intended effect in the present invention, the battery incorporating other unit cells may be included in the scope of the present invention. Also, when manufacturing the battery of the present invention, no specific manufacturing apparatus and related method may be used but, in consideration of the productivity, such a specific manufacturing apparatus and related method can of course be utilized for the purpose of manufacturing the battery of the present invention.

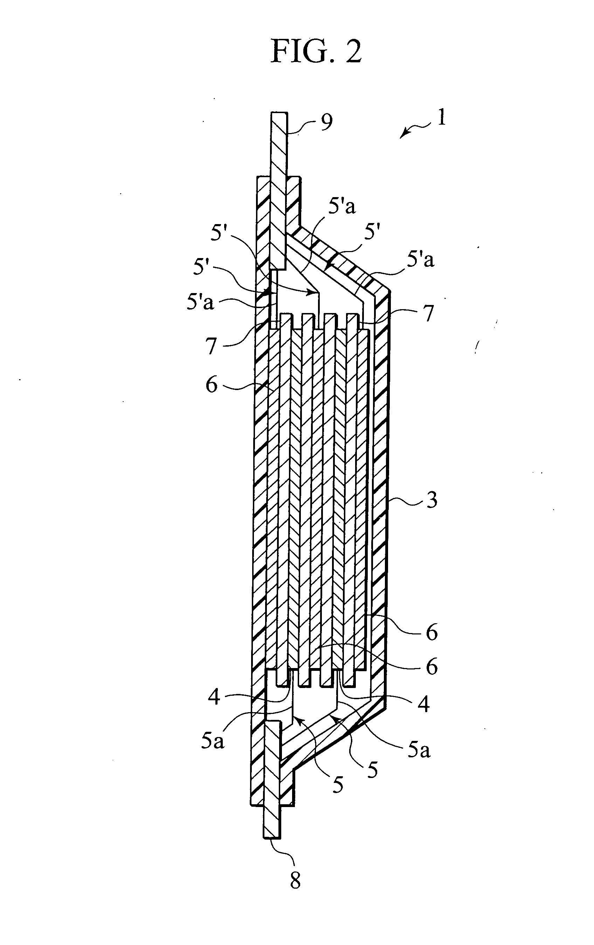

Fig. 2 shows a cross sectional view of the unit cell used in the battery of the presently filed embodiment.

As shown in Fig. 2, the lithium ion secondary battery 1 serving as the unit cell includes a battery which is able to be charged and discharge and is comprised of positive and negative electrodes both of which are made from material that can occlude and discharge lithium ion, and non-aqueous electrolyte that has a lithium ion conductivity.

More particularly, "the positive electrode" refers to a structure that includes a positive-electrode current collector 5 and a positive-electrode terminal lead 8 mounted to a distal end of the positive-electrode current collector 5. A positive electrode plate 4 refers to a structure that forms a reacting portion, incorporating positive electrode material (positive electrode active material), contained in the positive-electrode current collector 5. Both surfaces of the positive electrode plate 4 are coated with positive electrode material (positive electrode active material) and subsequently dried. Of course, the positive electrode plates each of which has one surface coated with the positive electrode material may be used in combination. Also, the positive electrode plate 4 and the positive-electrode terminal lead 8 are connected to one another by a positive-electrode lead connector portion 5a that forms a part of the positive-electrode current collector 5.

As such positive electrode material, a variety of general positive electrode materials, such as lithium metal oxide, composite oxide wherein a part of lithium metal oxide is substituted with another element, and manganese oxide, may be suitably employed. In particular, lithium metal oxide may include lithium cobalt oxide ($LiCoO_2$), lithium nickel ($LiNiO_2$), lithium manganese Oxide ($LiMnO_2$, $LiMn_2O_4$), lithium iron oxide ($Li_xFeO_y$) and lithium vanadium oxide ($Li_xV_yO_z$).

More particularly, among such positive electrodes materials, lithium manganese oxides may be preferably used. That is to say, if the lithium manganese oxides are used as positive electrode material, it becomes possible for the unit cell to have an appropriate gradient in the depth of discharge-open circuit characteristic. As a consequence, by utilizing lithium manganese oxides, the cycle characteristic of the battery can be effectively improved. Also, when using lithium manganese oxide as positive electrode material, the battery has an improved resistibility for decomposition caused by overcharging or heat of the battery.

Further, it may be preferred for lithium manganese oxides that a part of manganese is substituted with at least one element from the group containing cobalt (Co), nickel (Ni), magnesium (Mg), chromium (Cr), aluminum (Al) or lithium (Li). That is to say, by compelling the part of manganese to be substituted with these elements, the battery can have an appropriate gradient in the depth of discharge-open circuit voltage curve, resulting in an effective improvement in the cycle characteristic of the battery. Especially, such a structure is quite effective for increasing the gradient of the depth of discharge-open circuit voltage curve exhibited during the last stage of the charging period. Also, the amount of element to be substituted is selected to be equal to or less than 50 atom % and, more preferably, equal to or less than 20 atom % with respect to a total amount of manganese and the substituted element. Substitution of the part of manganese with these elements may be carried out by mixing a predetermined amount of the element in base material.

Further, positive electrode material may preferably include lithium nickel oxide. This is because of the fact that using lithium nickel oxide as positive electrode material enables the unit cell to have an appropriate gradient in the depth of discharge-open circuit voltage curve. Accordingly, by using lithium nickel oxide, the cycle characteristic of the battery can be effectively improved.

On the other hand, "negative electrode" includes a structure that involves a negative-electrode current collector 5' and a negative-electrode terminal lead 9 mounted to a distal end of the negative-electrode current collector 5'. A negative electrode plate 6 refers to a structure that forms a reacting portion, incorporating negative electrode material (negative electrode active material), contained in the negative-electrode current collector 5'. Both surfaces of the negative electrode plate 6 are coated with negative electrode material (negative electrode active material) and subsequently dried. Of course, the negative electrode plates each of which has one surface coated with the negative electrode material may be used in combination. Also, the negative electrode plate 6 and the negative-electrode terminal lead 9 are connected to one another by a negative-electrode lead connector portion 5'a that forms a part of the negative-electrode current collector 5'.

Such negative electrode materials are comprised of carbon materials such as hard carbon, soft carbon, graphite and active carbon, or metal oxides such as $SnB_xP_yO_z$, $Nb_2O_5$, $LiTi_xO_y$, $LiFe_xO_y$ and $LiMn_xO_y$, singly or in a mixture of these elements. Here, "hard carbon" refers to carbon material that can not be converted into graphite even when treated with heat at a temperature approximately equal to 3000°C. The "soft carbon" refers to carbon material that can be converted into graphite when treated with heat at the temperature approximately equal to or greater than 2800°C and approximately equal to or less than 3000°C. Also, when manufacturing hard carbon, it may be possible to use a method that utilizes starting material such as furan resin and organic material composed of petroleum pitch having an atomic ratio of H/C approximately equal to or greater than 0.6 and approximately equal to or less than 0.8. Further, when manufacturing soft carbon, it may be possible to use a method that utilizes starting material composed of coal, polymer compound (polyvinyl chloride resin, polyvinyl acetate, polyvinyl butylate) and pitch.

More particularly, negative electrode material may be preferably composed of amorphous carbon material such as hard carbon. That is to say, using these amorphous materials as negative electrode material enables the unit cell to have an appropriate gradient in the depth of discharge-open circuit voltage curve, wit a resultant capability of providing an improved cycle characteristic of the battery.

Here, defining appropriate amorphous carbon material more particularly, amorphous carbon material may preferably have a crystallite La equal to or greater than 10 nm and a crystallite Lc equal to or less than 1 nm. Also, "La" refers to a size of a crystallite in an a-axis direction and "Lc" refers to a size of a crystallite in a c-axis direction. These crystallites can be measured using measuring devices such as an X-ray analyzer or an electron diffractograph and can be suitably determined. Also, here, "amorphous carbon material" refers to carbon material with a lowered degree (degree of crystallization) of graphitization.

Further, a variety of technologies may be employed for forming positive electrode material and negative electrode material on the positive electrode plate 4, that forms the reacting portion of the positive-electrode current collector 5, and the negative electrode plate 6 that forms the reacting portion of the negative-electrode current collector 5', respectively, to thereby prepare the positive electrode and the negative electrode. In particular, the positive electrode may be manufactured by mixing positive electrode material with binder in a solvent to form paste-like material, coating paste-like material onto the positive electrode plate 4 and drying the same. Likewise, the negative electrode may be manufactured in the same way as the positive electrode. While the presently filed embodiment has been described in conjunction with an example wherein both surfaces of the positive electrode plate 4 are coated with positive electrode material and both surfaces of the negative electrode plate 6 are coated with negative electrode material, it may be altered such that the battery is comprised of electrode plates 4, 6 with one surfaces of the electrode plates 4, 6 being coated with respective electrode materials to be suitably combined in use. Also, the paste may be added with electrically conductive agents such as carbon black, graphite or acetylene black. Moreover, it is preferred that a mixture ratio between materials and binder is suitably determined in conformity with a shape of the electrode. In order to carry out coating, a variety of methods such as applying material may be appropriately employed.

Furthermore, the current collector may include a variety of general materials used for the lithium ion secondary battery and, more particularly, the positive-electrode current collector may be comprised of an aluminum foil whereas the negative-electrode current collector may be comprised of copper foil.

Moreover, the binder may include polyvinylidene fluoride (PVDF) and polytetrafluoro-ethylene, and the solvent may include various polarity solvents for dissolving binders. In particular, the solvent may include dimethyl formamide, dimethyl acetamide, methyl formamide and N-methyl pyrrolidone (NMP). Also, when using polyvinylidene fluoride as the binder, it is preferable to use N-methyl pyrrolidone.

And, the positive electrode plate 4 and the negative electrode plate 6 are separated from one another by a separator 7 to prevent these from being short circuited, and the separator 7 is composed of non-aqueous electrolyte.

Such a separator 7 may be comprised of a micro-porous film made from polyorefin resin such as poliethylene and polypropylene.

Further, non-aqueous electrolyte solvents to be used as non-aqueous electrolyte may preferably include various solutions having lithium ion conductivity and, in particular, ring-shaped carbonic ester such as ethylene carbonate (EC), propylene carbonate (PC) and butylene carbonate (BC) may be used in a single form or in a suitably combined form. Also, In order to obtain electrolyte with an increased electric conductivity and an appropriate viscosity, the non-aqueous electrolyte may be used in combination with dimethyl carbonate (DMC), diethyl carbonate (DEC), $\gamma$-butyrolactone, $\gamma$-valerolactone, ethyl acetate and propionic acid methyl.

The electrolyte contained in non-aqueous electrolyte solution may include $LiPF_6$, $LiBF_4$, $LiClO_4$, $LiAsF_6$ and $LiCF_3SO_3$.

Accordingly, it is thus concluded that the unit cell 1 of the presently filed embodiment is comprised of the positive electrode plates 4, the separators 7 and the negative electrode plates 6, as set forth above, which are stacked in a sequence.

More particularly, the unit cell 1 is structured such that negative electrode active material formed over the negative electrode plate 6 is disposed in opposition to positive electrode active material of the upwardly located positive electrode plate 4 via the separator 7 while negative electrode active material located at the lower side of the negative electrode plate 6 is disposed in opposition to positive electrode active material of the downwardly located positive electrode plate 4 via the separator 7 to allow these component elements to be sequentially stacked and joined to form a unitary structure.

While the present invention is not limited to a particular outer sheath structure of the unit cell 1, the unit cell 1 may be formed in a so-called laminate battery. The "laminate battery" refers to a battery in which a laminate film 3 is used as the outer sheath material of the unit cell 1. The present invention is not intended to be limited to a particular form of the laminate film to be used as such an outer sheath, and the outer sheath may take any form as long as it functions as the outer sheath of the unit cell. In particular, the outer sheath may be comprised of a polymer-metal composite film in which polypropyrene film, aluminum foil and polypropyrene film are laminated in this sequence.

The laminate battery 1 provides an ease of forming the battery shape in a flat plate shape. Increasing a surface area of the battery with respect to a thickness of the battery in such a way stated above enables heat transfer to be promoted between an interior and an exterior of the battery. In this connection, when locating the unit cells 1 so as to allow heat transfer to be adequately carried out between the unit cells 1 connected in parallel, heat transfer between the unit cells 1 is able to suppress an unevenness in temperature between the associated unit cells 1. Suppressing the unevenness in temperature between the unit cells 1 allows sources, that would otherwise cause unevenness in charging and discharging state between the unit cells 1 to be fundamentally rooted up, with a resultant capability in providing an improved cycle characteristic.

More particularly, the unit cell may be preferably formed in the flat plate shape with ratio (electrode surface area ($mm^2$)/thickness ($mm^2$) of the battery component) of the electrode surface area to the thickness of the battery component mentioned above lying in a value equal to or greater than 800. Here, the "electrode surface area" refers to a surface area of the battery component with respect to a direction perpendicular to a direction in which the positive electrode plate 4 and the negative electrode plate 6 are stacked and, in a case where, in one battery component, the electrode surface areas are partially different (that is, in a case where the surface area of the positive electrode plate 4 and the surface area of the negative electrode plate 6 are different from one another), the surface area of the positive electrode plate 4 is treated as a reference. Also, the "battery component" refers to a partial area which is accommodated inside the outer sheath 3 and substantially associated with charging and discharging and more particularly to a partial area in which the positive electrode plate 4, the separator 7 and the negative electrode plate 6 are stacked. Of course, in a case where more than two units, each of which includes the positive electrode plate 4, the separator 7 and the negative electrode plate 6, are stacked, the battery component includes a whole of the stacked area. Also, to broadly interpret the battery component in terms of the function of the battery component, the battery component is grasped as a concept involving the above-described positive electrode, the separator and the above-described negative electrode. Also, the "thickness of the battery component" refers to a thickness of the battery component, which is defined by the electrode plate, the separator and the negative electrode plate, in the direction in which the electrode plate, the separator and the negative electrode plate of the battery component are stacked.

Further, such a laminate battery 1 differs from a so-called can type battery, and the positive-electrode terminal lead 8 and the negative-electrode terminal lead 9 correspond to terminal portions B, respectively, to provide an ease of increasing the sizes of the terminal portions B shown in Fig. 1. If the terminal portion B is increased in such a manner set forth above, a large electric current flow is permitted to flow through the terminal portion B of a normal unit cell 1 even when a difficulty is encountered in charging and discharging capabilities in one of the units cells 1 connected in parallel due to occurrence of some abnormalities, thereby enabling the temperature to be prevented from being raised in the terminal portion B. For this reason, it is possible to cause a phenomenon, in that the battery hardly has the charging and discharging capabilities due to development of heat in the terminal portion B, to hardly occur.

More particularly, as shown in Fig. 1, suppose the cross sectional area of the terminal portion A of the battery BAT is Sa and the number of rows in parallel of the unit cells 1 is n, it is effective for the cross sectional area of the terminal portion B of the unit cell 1 to be determined to have a value equal to or greater than Sa/n. In consideration of an actually applied situation, the cross sectional area of the terminal portion B of the unit cell 1 may be preferably determined in a range equal to or greater than 4 mm$^2$ and equal to or less than 8 mm$^2$. However, the present invention is not intended to be limited to such a range.

By the way, the battery BAT with the structure set forth above may be incorporated in various equipments as a source of drive power. The battery per se can be installed on the various equipments, and also as shown in Fig. 1, assembling the batteries BAT is available to form the battery modules M, which may be installed on the various equipments. When manufacturing such battery modules, the batteries may be preferably connected in series. That is to say, it is possible to obtain battery modules each with a large output capacity and an excellent cycle characteristic.

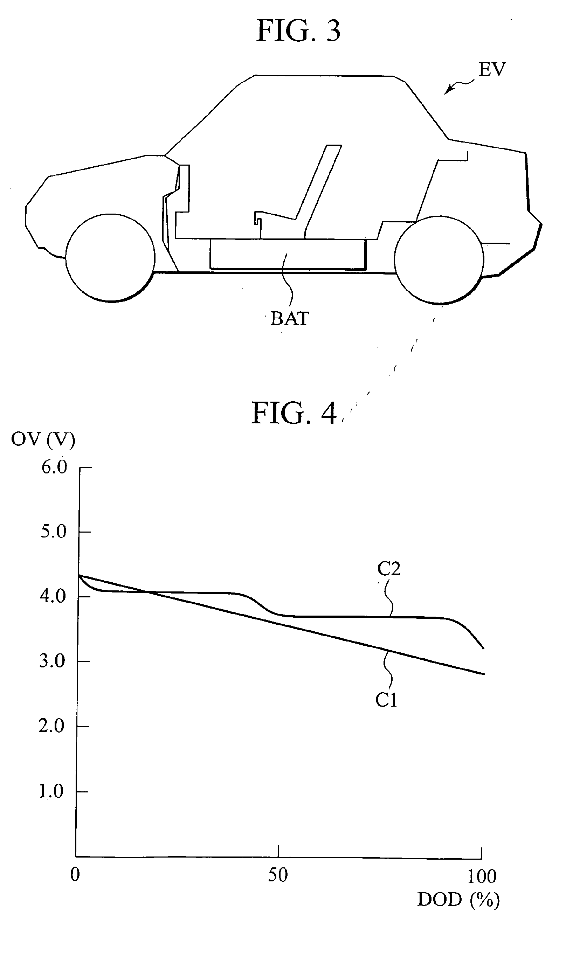

Further, although the batteries BAT and the battery modules M with the structures set forth above can be applied to various electric equipments, as shown in Fig. 3, the battery BAT and the battery module M may be particularly preferable to be applied in a vehicle EV such as an electric automobile. It is generally required for such a vehicle to have a large output capacity and a long battery life (with no requirements in battery Substitution or no service for repair). Also, it is strongly required for such a vehicle to have a lessened probability in reduction in power output caused by continuous use. As previously noted above, the battery and the battery module with the structures set forth above and with the excellent cycle characteristics exhibit extremely excellent properties in compliance with these requirements and may be appropriately applied.

Now, with the structures set forth above, a detailed description is given below with reference to a first Studied Example typically indicative of an effect of the positive electrode material exerted to the depth of discharge-open circuit voltage curve.

First Studied Example: Study for Effect of Positive Electrode Material Exerted to Depth of Discharge-Open Circuit Voltage Curve

In the presently filed Studied Example, first, the unit cell was prepared using lithium nickel oxide (LiNiO$_2$) as positive electrode material (positive electrode active material). More particularly, the positive electrode plate was prepared by applying paste-like material, which was prepared by mixing positive electrode active material, composed of lithium nickel oxide, in a quantity of 85 % by mass (85 mass %), acetylene black as electrically conductive material in a quantity of 10 % by mass (10 mass %), and PVDF (polyvinylidene fluoride) as binder in a quantity of 5 % by mass (5 mass %) in solvent of NMP (N- methyl pyrrolidone), onto the aluminum foil and draying the same. The separator was made from PP (Polypropyrene). The negative electrode plate was prepared using negative electrode material composed of metallic lithium. The positive electrode plate, the separator and the negative electrode plate were cut in given sizes and stacked with respect to one another whereupon the stack was packed in the laminate film as shown in Fig. 2, thereby obtaining the lithium ion secondary battery. Also, electrolyte solution was used which was made from a mixture (at a volume ratio of 1 : 1) of PC (propyrene carbonate) and DMC (dimethyl carbonate), dissolved with 1M of LiPF$_6$.

Also, the other unit cell having the similar structures, except for positive electrode material including lithium manganese oxide (LiMnO$_2$) lithium nickel oxide (LiNiO$_2$), was prepared.

And, research was conducted for these unit cells in a sequence described below to check the relationship between the depth of discharge and the open circuit voltage.

Initially, the unit cell was fully charged for 2.5 hours, with a charging terminal voltage being selected to be 4.2 V.

Subsequently, when the unit cell has reached the charging terminal voltage, the output voltage of the unit cell was maintained at 4.2 V for 2.5 hours.

Thereafter, the unit cell was discharged with a constant discharging electric current at 1C for six minutes, resulting in increase in the depth of discharge by 10 %.

Next, the unit cell were left for ten minutes until the output voltage of the unit cell was stabilized, whereupon the output voltage during the stabilized condition was measured as the open circuit voltage.

And, the above-described works were sequentially repeated until the depth of discharge reached a value of 100 %.

Fig. 4 shows research results representative of the relationships between the depth of discharge-open circuit voltage obtained in the unit cells through the works set forth above. In Fig. 4, the abscissa axis represents the depth of discharge DOD (%), and the ordinates axis represents the open circuit voltage OV (V).

As shown by a curve C1 in a solid line in the figure, the unit cell using lithium nickel oxide as positive electrode material exhibits the open circuit voltage, with respect to the depth of discharge, in a gradient lying in a substantially constant value. Accordingly, it is possible to adjust the gradient of the open circuit voltage with respect to the depth of discharge so as to lie in a substantially constant range (equal to or greater than 5 mV/% and equal to or less than 20 mV/%) by adopting lithium nickel oxide as positive electrode material. Also, as a result, a similar tendency is confirmed when using carbon material such as hard carbon or metal oxide such as $SnB_xP_yO_z$ as negative electrode material and, so, it is possible to increase the range in which negative electrode materials can be selected. Also, when using lithium manganese oxide ($LiMn_2O_4$) as positive electrode material, the similar tendency is confirmed.

Further, as shown by a curve C2 in a solid line in the figure, even when using lithium manganese oxide as positive electrode material, it is confirmed that the gradient of the open circuit voltage with respect to the depth of discharge is enabled to increase to the range equal to or greater than 5 mV/% and equal to or less than 20 mV/% at a region around 50 % of the depth of discharge or a region in the vicinity of 0 %. Also, as a result, a similar tendency is confirmed when using carbon material such as hard carbon or metal oxide such as $SnB_xP_yO_z$ as negative electrode material. Also, when using lithium manganese oxide ($LiMn_2O_4$) as positive electrode material, the similar tendency is confirmed.

Now, a detailed description is given below with reference to a second Studied Example typically indicative of an effect of the positive electrode material exerted to the depth of discharge-open circuit voltage curve, when manganese is substituted in positive electrode material.

Second Studied Example: Study for Effect of Positive Electrode Material Exerted to Depth of Discharge-Open Circuit Voltage Curve When Manganese is Substituted in Positive Electrode Material

In the presently filed Studied Example, first, as used in the first Studied Example, the unit cell was similarly prepared using lithium manganese oxide ($LiMnO_2$) as the positive electrode material and using metallic lithium as negative electrode material.

Also, the other unit cell having similar structures while using negative electrode material composed of metallic lithium, except for positive electrode material being composed of lithium manganese oxide wherein a part (of 20 atom %) of manganese is substituted with cobalt, was prepared.

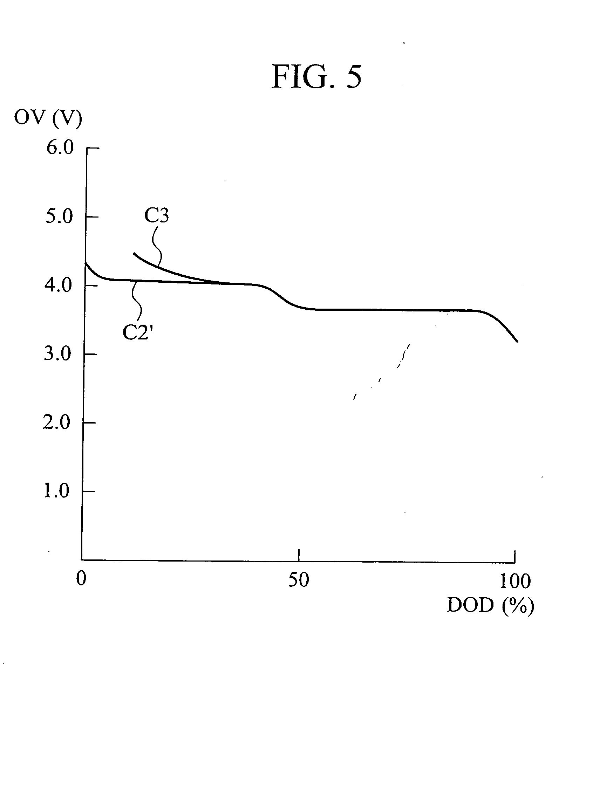

And, research was conducted for these unit cells in the same sequence described above as the first Studied Example to check the relationship between the depth of discharge and open circuit voltage, with the result being shown in Fig. 5. In the figure, the abscissa axis represents the depth of discharge DOD (%), and the ordinates axis represents the open circuit voltage OV (V).

As shown by a curve C3 in a solid line in the figure, the unit cell using lithium manganese oxide, substituted with cobalt, as positive electrode material exhibits a gradient of the open circuit voltage falling in a range equal to or greater than 5 mV/% and equal to or less than 20 mV/% with respect to the depth of discharge falling in a region equal to or greater than 10 % and equal to or less than 30 %.

On the other hand, as shown by the curve C2' in a solid line in the figure, when using lithium manganese oxide as positive electrode material, the open circuit voltage of the unit cell varies in the same way as shown by the curve C2 in Fig. 4. More particularly, the unit cell exhibits the gradient of the open circuit voltage falling in a range equal to or greater than 5 mV/% and equal to or less than 20 mV/% with respect to the depth of discharge falling in a region equal to or greater than 0 % and equal to or less than 10 %.

As a result of the above Studies, it is confirmed that, by forming positive electrode material from lithium manganese oxide wherein a part of the manganese is substituted with the other element, the gradient of the open circuit voltage with respect to the depth of discharge can be suitably adjusted. Also, when using lithium manganese oxide ($LiMn_2O_4$) as positive electrode material, the similar tendency is observed.

Now, a detailed description is given below with reference to a third Studied Example typically indicative of effects caused by kinds of the negative electrode materials and exerted to the depth of discharge-open circuit voltage curve.

Third Studied Example: Study for Effects of Negative Electrode Material Exerted to Depth of Discharge-Open Circuit Voltage Curve

In the presently filed Studied Example, the unit cell was prepared in the same way as that of the first Studied Example except for positive electrode material being composed of metallic lithium and negative electrode material being composed of amorphous carbon material (hard carbon). Also, more particularly, the negative electrode plate was prepared by preparing paste-like material containing carbon material in a quantity of 95 % by mass (95 mass %) and binder composed of PFDF in a quantity of 5 % by mass (5 mass %), wherein the carbon material and the binder were mixed in NMP solvent, and then by applying the copper foil with the paste-like material which was dried.

Also, the other unit cell having similar structures except for negative electrode material being composed of graphite was prepared, that is, the other unit cell included positive electrode material being composed of metallic lithium and negative electrode material being composed of graphite.

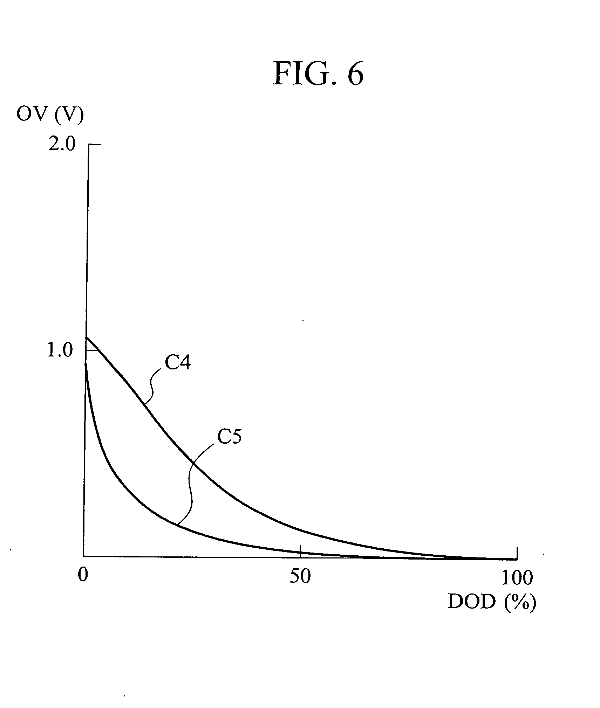

And, research was conducted for these unit cells in the same sequence described above as the first Studied Example to check the relationship between the depth of discharge and the open circuit voltage, with the result being shown in Fig. 6. In the figure, the abscissa axis represents the depth of discharge DOD (%), and the ordinates axis represents the open circuit voltage OV (V).

As shown by a curve C4 in a solid line in the figure, the unit cell using amorphous carbon material as negative electrode material exhibits a gradient of the open circuit voltage falling in a range equal to or greater than 5 mV/% and equal to or less than 20 mV/% with respect to the depth of discharge falling in a region equal to or greater than 0 % and equal to or less than 70 %.

On the other hand, as shown by the curve C5 in a solid line in the figure, when using graphite as negative electrode material, the unit cell exhibits the gradient of the open circuit voltage falling in a range equal to or greater than 5 mV/% and equal to or less than 20 mV/% with respect to the depth of discharge falling in a region equal to or greater than 10 % and equal to or less than 40 %.

As a result of the above study, it is confirmed that, by forming negative electrode material from selected material, the gradient of the open circuit voltage with respect to the depth of discharge can be suitably adjusted. Also, such a result is confirmed in that the unit cell used with negative electrode material composed of metal oxide such as $SnB_xP_yO_z$ exhibits a similar tendency. Here, especially when using negative electrode material composed of amorphous carbon material (hard carbon), it is concluded that the unit cell is confirmed to exhibit a superior priority.

Now, a detailed description is given below with reference to a fourth Studied Example typically indicative of Effects caused by combinations of various electrode materials and exerted to the depth of discharge-open circuit voltage curve.

Fourth Studied Example: Study for Effects Caused by Various Electrode Materials, Exerted to Depth of Discharge-Open Circuit Voltage Curve

In the presently filed Studied Example, the unit cell was prepared in the same way as that of the third Studied Example except for positive electrode material being composed of lithium cobalt, oxide ($LiCoO_2$). Also, negative electrode material was made from amorphous carbon material (hard carbon).

Also, another unit cell having the similar structure except for positive electrode material being composed of lithium manganese oxide ($LiMn_2O_4$) was prepared, that is, another unit cell was comprised of positive electrode material being composed of lithium manganese oxide ($LiMn_2O_4$) and negative electrode material being composed of amorphous carbon material (hard carbon). Likewise, the other unit cell having the similar structure except for negative electrode material being composed of graphite was prepared, that is, the other unit cell was comprised of positive electrode material being composed of lithium manganese oxide ($LiMn_2O_4$) and negative electrode material being composed of graphite.

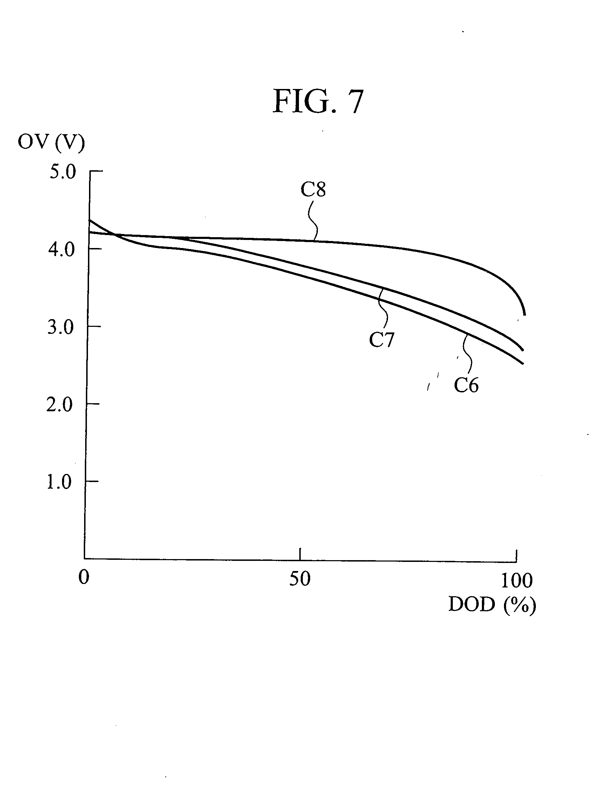

And, research was conducted for these unit cells in the same sequence described above as the first Studied Example to check the relationship between the depth of discharge and the open circuit voltage, with the result being shown in Fig. 7. In the figure, the abscissa axis represents the depth of discharge DOD (%), and the ordinates axis represents the open circuit voltage OV (V).

As shown by a curve C6 in a solid line in the Fig. 7, the unit cell using lithium manganese oxide ($LiMn_2O_4$) as positive electrode material and amorphous carbon material (hard carbon) as negative electrode material exhibits a gradient of the open circuit voltage falling in a range equal to or greater than 5 mV/% and equal to or less than 20 mV/% with respect to the depth of discharge in a region of a total amount of 90 % (i.e., a range equal to or greater than 0 % and equal to or less than 10 % and a range equal to or greater than 20 % and equal to or less than 100 %). Also, even though the region of the depth of discharge in which the gradient of the open circuit voltage of the fourth Studied Example varies in terms of the depth of discharge is different from those of the depth of discharges in the first and second Studied Examples, the unit cell of the fourth Studied Example exhibits the same tendency in characteristic as those of the curve C2 in Fig. 4 and the curve C2' in Fig. 5.

Also, as shown by the curve C7 in a solid line in Fig. 7, when using lithium cobalt oxide ($LiCoO_2$) as positive electrode material and amorphous carbon material as negative electrode material, the unit cell exhibits the gradient of the open circuit voltage falling in a range equal to or greater than 5 mV/% and equal to or less than 20 mV/% with respect to the depth of discharge at a region of 80 % (i.e., a range equal to or greater than 20 % and equal to or less than 100 %).

Moreover, as shown by the curve C8 in a solid line in Fig. 7, when using lithium cobalt oxide ($LiCoO_2$) as positive electrode material and graphite as negative electrode material, the unit cell exhibits the gradient of the open circuit voltage falling in a range equal to or greater than 5 mV/% and equal to or less than 20 mV/% with respect to the depth of discharge at a region of 20 % (i.e., a range equal to or greater than 80 % and equal to or less than 100 %).

As a result of the above Studies, it is confirmed that, by using lithium manganese oxide ($LiMn_2O_4$) as positive electrode material, the gradient of the open circuit voltage with respect to the depth of discharge can be suitably controlled. Also, such a result is confirmed in that using negative electrode material composed of amorphous carbon material (hard carbon) enables the gradient of the open circuit voltage to be appropriately controlled in terms of the depth of discharge. Moreover, when using lithium manganese oxide ($LiMnO_2$) as positive electrode material, it is concluded that the unit cell has a similar tendency.

Now, a detailed description is given below with reference to a fifth Studied Example typically indicative of Effects caused by a gradient of the depth of discharge-open circuit voltage curve exerted to the cycle characteristic of the battery.

Fifth Studied Example: Study for Effects Caused by Gradient of Depth of Discharge-Open Circuit Voltage Curve Exerted to Cycle Characteristic

In the presently filed Studied Example, the battery BAT was prepared in the same way as that of the fourth Studied Example using the unit cells 1 (positive electrode material: lithium manganese oxide ($LiMn_2O_4$); negative electrode material: amorphous carbon material (hard carbon)), each of which has the gradient of the open circuit voltage falling in a range equal to 5 mV/% and equal to or less than 20 mV/% with respect to the depth of discharge at a region of the sum of 90 % in a structure in which, as shown in Fig. 1, four sets of these two unit cells 1 connected in parallel are connected in series.

And, by using such a battery, operations are repeatedly executed to charge and discharge the battery each in one cycle involving steps of charging, charging-stop, discharging and discharging-stop. Here, charge of the battery is performed with a constant charging current at 1C, with the charging terminal voltage being selected to be 4.2V to allow the charging to be terminated at the voltage of 4.2V. Also, discharge of the battery is performed with a constant discharging current at 1C, with the discharging terminal voltage being selected to be 2.5V to allow the discharging to be terminated at the voltage of 2.5V. Moreover, the charging discontinuance time interval and the charging discontinuance time interval are selected to be ten minutes, respectively.

During such operations, a discharge capacity for each one cycle is obtained in the following formula:

$$\text{Discharge Capacity (Ah) = Discharge Current (A) x Discharge Time Interval (h)}$$

Using this, a capacity retention rate is calculated in the following formula:

$$\text{Capacity Retention Rate (\%)} = \frac{\text{Discharge Capacity For Each Cycle}}{\text{Discharge Capacity At First Cycle}} \times 100$$

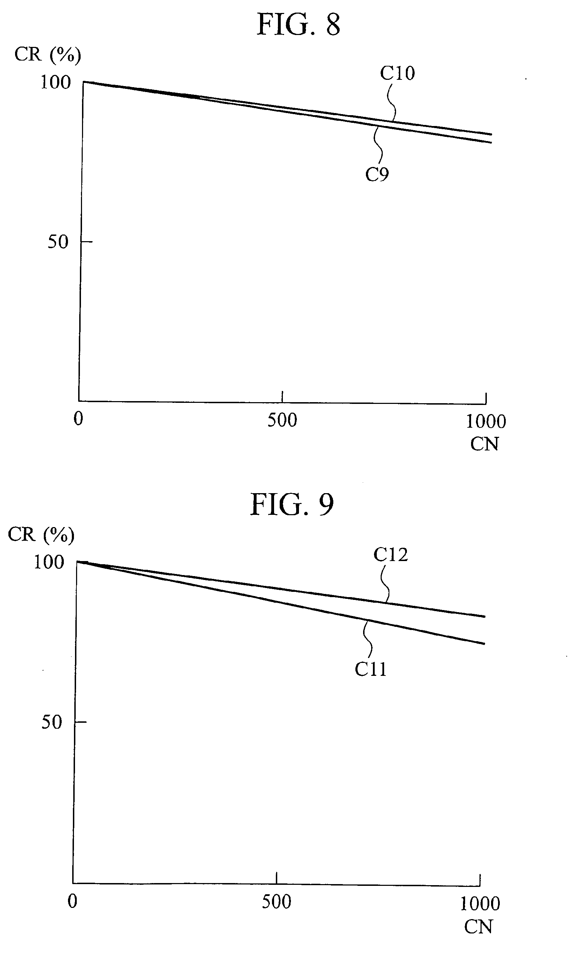

Fig. 8 shows the relationship between the number CN (cycle times) of such cycles and the capacity retention rate CR (%).

In the figure, a curve C9 shows the relationship between the number CN of the cycles of the battery and the capacity retention rate CR, and, for a reference, a curve C10 shows the relationship between the number CN of the cycles of the unit cell and the capacity retention rate CR.

As shown in Fig. 8, it can be confirmed that the battery with the structure set forth above has an excellent cycle characteristic equal in level to the unit cell.

On the other hand, research was conducted to obtain the relationship between the number of cycles and the capacity retention rate in the same manner stated above except for the use of the unit cell 1 (positive electrode material: lithium cobalt oxide ($LiCoO_2$); negative electrode material: graphite), prepared in the fourth Studied Example, which has the gradient of the open circuit voltage falling in a range equal to 5 mV/% and equal to or less than 20 mV/% with respect to the depth of discharge at a region of the sum of 20 %.

Fig. 9 shows the relationship between the number CN (cycle times) of such cycles and the capacity retention rate CR (%).

In the figure, a curve C11 shows the relationship between the number CN of the cycles of the battery and the capacity retention rate CR, and, for a reference, a curve C12 shows the relationship between the number CN of the cycles of the unit cell per se and the capacity retention rate CR.

As shown in Fig. 9, the battery with such a structure set forth above was confirmed to have a lower cycle characteristic than that of the unit cell. It is conceivable that such a phenomenon results from the fact that the unit cell forming the battery shown in Fig. 9 has the region defined in 20 % of depth of discharge to cause the gradient of the open circuit voltage, with respect to the depth of discharge, to lie in the range equal to or greater than 5 mV/% and equal to or less than 20 mV/%.

And, in actual practice, it has become found out that the battery can be adequately obtained which has the cycle characteristic deemed to be equal to that of the unit cell when using the unit cell whose gradient of open circuit voltage with respect to the depth of discharge lies in the range equal to or greater than 5 mV/% and equal to or less than 20 mV/% at the depth of discharge of the region greater than 50 %. Additionally, more preferably, it has become found out that such a result can be reliably and satisfactorily obtained when using the unit cell whose gradient of open circuit voltage with respect to the depth of discharge lies in the range equal to or greater than 5 mV/% and equal to or less than 20 mV/% at the depth of discharge of the region greater than 80 %.

Now, a description is given below in conjunction with a sixth Studied Example for which study has been conducted to see the meaning why the unit cell is comprised of the laminate cell.

Sixth Studied Example: Study for Meaning of Unit Cell being Composed of Laminate Cell

In the presently filed Studied Example, the unit cell was prepared in the same way as that of the fourth Studied Example except for positive electrode material being composed of lithium manganese oxide ($LiMn_2O_4$) and negative electrode material being composed of amorphous carbon material.

Such a unit cell was prepared as the laminate battery using a laminate film as the outer sheath material, with a plurality of such laminate batteries being connected in a configuration shown in Fig. 1 to form a battery BAT.

In contrast, a can type unit cell was completed in the same way as described above with the exception for the use of a can made from stainless steel in place of the laminate film as the outer sheath of the unit cell, with a plurality of such can type unit cells being connected in a configuration shown in Fig. 1 to form a battery.

And, research was conducted for these unit cells in the same sequence described above as the fifth Studied Example to check the relationship between the number of cycles and the capacity retention rate.

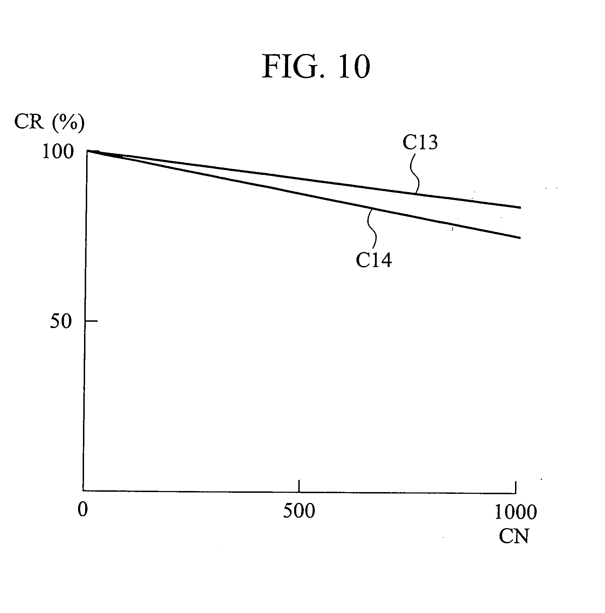

Fig. 10 shows the relationship between the number (cycle times) CN of cycles and the capacity retention rate CR (%).

In the figure, a curve C13 represents the relationship between the number CN of cycles and the capacity retention rate CR for the battery using the laminate battery, and a curve C14 represents the relationship between the number CN of cycles and the capacity retention rate CR for the battery using the can type unit cell.

As shown in Fig. 10, it is confirmed that, by forming the unit cell with the laminate battery, the battery has an improved cycle characteristic.

The entire content of a Patent Application No. TOKUGAN 2002-115308 with a filing date of April 17, 2002 in Japan is hereby incorporated by reference.

Although the invention has been described above by reference to a certain embodiment of the invention, the invention is not limited to the embodiment described above. Modifications and variations of the embodiment described above will occur to those skilled in the art, in light of the teachings. The scope of the invention is defined with reference to the following claims.

**Claims**

**1.** A battery (BAT) comprising:

> connector members (W); and
> a plurality of unit cells (1) connected in parallel through the connector members, each of the plurality of unit cells having a gradient in a curve of an open circuit voltage with respect to a depth of discharge such that depths of discharge of the plurality of the unit cells are balanced in level to one another.

**2.** The battery according to claim 1, wherein the gradient in the curve falls in a range equal to or greater than 5 mV/% and equal to or less than 20 mV/% in a region equal to or greater than 50 % of the depth of discharge.

3. The battery according to claim 1 or 2, wherein each of the plurality of unit cells (1) has a positive electrode portion (4), an electrolyte portion (7) and a negative electrode portion (6).

4. The battery according to claim 3, wherein positive electrode material of the positive electrode portion (4) includes lithium manganese oxide.

5. The battery according to claim 4, wherein a part of manganese contained in the lithium manganese oxide is substituted with at least one element selected from Co, Ni, Mg, Cr, Al and Li.

6. The battery according to claim 3, wherein positive electrode material of the positive electrode portion (4) includes lithium nickel oxide.

7. The battery according to claim 3, wherein negative electrode material of the negative electrode portion (6) is amorphous carbon material.

8. The battery according to claim 3, wherein the positive electrode portion (4), the electrolyte portion (7) and the negative electrode portion (6) are stacked in a stacking direction to allow a ratio of a surface area of the positive electrode portion or the negative electrode portion with respect to a sum of a thickness of the positive electrode portion, a thickness of the electrolyte portion and a thickness of the negative electrode portion in the stacking direction lies in a value equal to or greater than 800.

9. The battery according to any one of claims 1 to 8, wherein each of the plurality of unit cells (1) includes a laminate battery.

10. The battery according to any one of claims 1 to 9, wherein all of the plurality of unit cells (1) are connected in parallel with one another.

11. The battery according to any one of claims 1 to 10, wherein a cross sectional area of each terminal portion (B) of the plurality of unit cells (1) is greater than a value obtained by dividing a cross sectional area of a terminal portion (A) of the battery (BAT) by a number of pieces of the plurality of unit cells (1).

12. The battery according to any one of claims 1 to 11, wherein the batteries (BAT) are connected in series with one another to form a battery module (M).

13. The battery according to any one of claims 1 to 12, wherein the battery (BAT) is installed in a vehicle (EV).

14. The battery according to claim 12, wherein the battery module (M) is installed in a vehicle (EV).

15. A battery (BAT) comprising:

   connector members (W); and
   a plurality of unit cells (1) connected in parallel through the connector members, each of the plurality of unit cells having balancing means for balancing depths of discharge of the plurality of the unit cells to one another.

16. A method of manufacturing a battery (BAT), comprising:

   preparing connector members (W); and
   connecting a plurality of unit cells (1) in parallel through the connector members, each of the plurality of unit cells having a gradient in a curve of an open circuit voltage with respect to a depth of discharge such that depths of discharge of the plurality of the unit cells are balanced in level to one another.

# FIG. 1

# FIG. 2

# FIG. 3

EV

BAT

# FIG. 4

OV (V)

6.0

5.0

4.0

3.0

2.0

1.0

C2

C1

0　　　　　　　50　　　　　　100

DOD (%)

## FIG. 5

FIG. 6

## FIG. 7

# FIG. 8

CR (%)

# FIG. 9

CR (%)

## FIG. 10

CR (%)

100

C13

C14

50

0      500      1000

CN

**European Patent Office**

## EUROPEAN SEARCH REPORT

Application Number

EP 03 00 7290

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 2001/037557 A1 (ARAGANE JUN ET AL) 8 November 2001 (2001-11-08) * paragraphs [0031],[0062] * --- | 1-16 | H01M10/44 H02J7/00 B60L11/18 H01M10/40 |
| X | US 2001/054877 A1 (KINOSHITA NAOKI) 27 December 2001 (2001-12-27) * paragraphs [0004]-[0006],[0010],[0011] * --- | 1-7,10, 12-16 | |
| A | TARASCON J M ET AL: "THE LI1+XMN2O4/C ROCKING-CHAIR SYSTEM: A REVIEW" ELECTROCHIMICA ACTA, ELSEVIER SCIENCE PUBLISHERS, BARKING, GB, vol. 38, no. 9, 1 June 1993 (1993-06-01), pages 1221-1231, XP000380767 ISSN: 0013-4686 * page 1222, left-hand column, line 20-27; figures 3A,B * --- | 1-16 | |
| A | US 5 959 371 A (MAILE KEITH R ET AL) 28 September 1999 (1999-09-28) * column 26, line 60 - column 27, line 8; figure 2 * --- | 1-3 | TECHNICAL FIELDS SEARCHED (Int.Cl.7) H01M H02J B60L |
| A | PATENT ABSTRACTS OF JAPAN vol. 2002, no. 05, 3 May 2002 (2002-05-03) & JP 2002 010501 A (HONDA MOTOR CO LTD), 11 January 2002 (2002-01-11) * abstract * --- | 1 | |
| A | US 5 948 556 A (HALL JOHN C ET AL) 7 September 1999 (1999-09-07) * abstract * * column 5, line 37-46 * ----- | 1 | |

The present search report has been drawn up for all claims

| Place of search | Date of completion of the search | Examiner |
|---|---|---|
| MUNICH | 23 September 2003 | Hammerstein, G |

EPO FORM 1503 03.82 (P04C01)

**ANNEX TO THE EUROPEAN SEARCH REPORT
ON EUROPEAN PATENT APPLICATION NO.**                    EP 03 00 7290

This annex lists the patent family members relating to the patent documents cited in the above-mentioned European search report.
The members are as contained in the European Patent Office EDP file on
The European Patent Office is in no way liable for these particulars which are merely given for the purpose of information.

23-09-2003

| Patent document cited in search report | | Publication date | Patent family member(s) | | Publication date |
|---|---|---|---|---|---|
| US 2001037557 | A1 | 08-11-2001 | WO<br>CN<br>EP | 9940644 A1<br>1255250 T<br>0973222 A1 | 12-08-1999<br>31-05-2000<br>19-01-2000 |
| US 2001054877 | A1 | 27-12-2001 | JP<br>JP | 2002010501 A<br>2002042901 A | 11-01-2002<br>08-02-2002 |
| US 5959371 | A | 28-09-1999 | US<br>US | 5869970 A<br>6426628 B1 | 09-02-1999<br>30-07-2002 |
| JP 2002010501 | A | 11-01-2002 | US | 2001054877 A1 | 27-12-2001 |
| US 5948556 | A | 07-09-1999 | US | 5993993 A | 30-11-1999 |

EPO FORM P0459

For more details about this annex : see Official Journal of the European Patent Office, No. 12/82